# EUROPÄISCHE PATENTSCHRIFT

(11) **EP 3 300 586 B1**
(45) Veröffentlichungstag und Bekanntmachung des Hinweises auf die Patenterteilung: **01.04.2020**
(21) Anmeldenummer: 17171199.7
(22) Anmeldetag: 16.05.2017
(51) Int. Cl.: A01F 15/07

(54) **BALLENPRESSE**
BALING PRESS
PRESSE À BALLES

(30) Priorität: 28.09.2016 DE 102016118305
(43) Veröffentlichungstag der Anmeldung: 04.04.2018
(73) Patentinhaber: Usines CLAAS France S.A.S, 57140 St. Rémy / Woippy (FR)
(72) Erfinder: Magar, Sébastie, 57480 Waldwisse (FR); Anstotz, Arnaud, 67000 Strasbourg (FR)
(74) Vertreter: CLAAS Gruppe

(56) Entgegenhaltungen:
- EP-A1- 0 965 263
- EP-A1- 1 808 065
- WO-A1-2010/041956
- DE-A1- 3 424 567
- DE-A1- 3 634 571
- DE-A1- 4 019 108

## Beschreibung

Die Erfindung betrifft eine Ballenpresse gemäß dem Oberbegriff des Anspruches 1.

Ballenpressen, insbesondere Rundballenpressen, werden üblicherweise von einem Zugfahrzeug, beispielsweise einem Traktor, zur Aufnahme von in Form eines Schwads abgelegten Erntegutes über ein Feld gezogen. Das Erntegut wird dabei über eine Aufnahmevorrichtung, eine sogenannte Pickup, aufgenommen und einer nachgeordneten Presskammer zugeführt. In der Presskammer wird das Erntegut verdichtet und zu einem Ballen geformt. Bei einer Rundballenpresse kann die Presskammer einen festen Durchmesser aufweisen oder in Form einer Presskammer mit variablem Durchmesser ausgebildet sein. Eine Festkammerpresse mit einer Presskammer mit festem Durchmesser weist dabei entlang ihres Umfanges feststehende Presswalzen auf. Bei einer Ballenpresse mit einer Presskammer mit einem variablen Durchmesser wird die Presskammer durch ein üblicherweise endlos umlaufendes Pressmittel gebildet und begrenzt. Ein Pressmittel kann beispielsweise in Form eines oder mehrerer endlos und um teilweise verstellbare Rollen umlaufende Pressriemen ausgebildet sein. Die verstellbaren Rollen können an beweglichen Spannarmen angeordnet sein, wobei durch eine Veränderung der Position der Spannarme beispielsweise die Größe der Presskammer und ein auf das Erntegut in der Presskammer wirkender Pressdruck des Pressmittels verändert werden können.

Vor dem Auswerfen aus der Presskammer wird der fertig gepresste Rundballen mit einem Bindemittel, beispielsweise in Form von Garn, eines Netzes oder einer Folie, umhüllt, um den Ballen zu stabilisieren und ein Auseinanderfallen zu vermeiden. Das Bindemittel wird dabei auf einer Rolle vorgehalten, von der das Bindemittel nach Bedarf abgerollt und der Presskammer zum Umwickeln des Ballens zugeführt wird. Eine Zufuhr des Bindemittels zu dem Ballen in der Presskammer erfolgt üblicherweise durch einen Zuführspalt und er eine daran angrenzend angeordnete Rolle. Während des Umwickelns wird das Bindemittel über eine Bremseinrichtung unter Spannung gehalten, um ein besseres Ergebnis der Bindung zu bekommen. Wenn genug Bindemittel um Ballen gewickelt ist, erfolgt ein Durchtrennen des Bindemittels mittels einer Trenneinrichtung. Eine derartige Ballenpresse ist beispielsweise aus der DE 32 24 567 A1 bekannt.

Aus der WO 2010/112373 A1 ist eine Rundballenpresse mit einer variablen Presskammer mit einer Bindevorrichtung für ein Bindemittel in Form eines Netzes bekannt. Das Bindemittel wird auf einer gebremsten Rolle vorgehalten. Mittels eines Schwenkarmes ist das Bindemittel an einen Zuführspalt und an eine daran angrenzend angeordnete Rolle zuführbar, um einen Rundballen in der Presskammer zu umwickeln. Nachteilig ist hierbei jedoch, dass eine Spannung in dem Bindemittel nur durch eine Bremse an der Rolle selber einstellbar ist, wodurch es zu Schwankungen in der Spannung des Bindemittels während des Wickelns kommen kann. Dies kann zu einer Verringerung der Stabilität des gewickelten Ballens führen, wodurch es beispielsweise zu Deformationen des Ballens kommen kann. Zudem kann es konstruktionsbeding nach dem Abtrennen zu einem Abfall der Spannung in dem Bindemittel kommen, wodurch es zu einem Verheddern des Bindemittels und dadurch zu einem unsauberen Einlauf bei einem nachfolgenden Rundballen kommen kann, was zu einem erhöhten Materialbedarf führt.

Es ist daher eine Aufgabe der Erfindung, eine Ballenpresse bereitzustellen, welche eine verbesserte Steuerung der Spannung in dem Bindemittel sowie eine Verbesserung der Wicklung eines Rundballens mit einem Bindemittel ermöglicht.

Diese Aufgabe wird erfindungsgemäß durch eine Ballenpresse mit den Merkmalen des Anspruches 1 gelöst. Vorteilhafte Ausgestaltungen sind in den abhängigen Ansprüchen wiedergegeben, welche jeweils für sich genommen oder in Kombination miteinander einen Aspekt der Erfindung darstellen können.

Eine Ballenpresse gemäss DE 3424567 umfasst eine in einem Gehäuse angeordnete Presskammer, zum Pressen von Rundballen aus einem Erntegut, eine Bindevorrichtung zum Bereitstellen eines Bindemittels zum Umwickeln eines Rundballens in der Presskammer, wobei umfangsseitig der Presskammer mindestens ein Zuführspalt ausgebildet ist, durch welchen das Bindemittel in die Presskammer zuführbar ist, wobei die Bindevorrichtung eine Bremseinheit zum Spannen und/oder Klemmen des Bindemittels und eine Trenneinheit zum Trennen des Bindemittels umfasst.

Die Bremseinheit weist mindestens zwei parallel zueinander angeordnete Bremsleisten auf, wobei zwischen den Bremsleiten ein Führungsspalt zur Aufnahme des Bindemittels ausgebildet ist, wobei die Bremseinheit rotatorisch verlagerbar ausgebildet sind.

Durch eine translatorische und/oder rotatorische Verlagerung der Bremseinheit und/oder der Bremsleisten, insbesondere während des Umwickelns des Ballens mit Bindemittel, kann das in dem Führungsspalt angeordnete Bindemittel gegen die Bremsleisten gepresst werden, wodurch eine steuerbare Bremswirkung an dem Bindemittel erreicht werden kann. Dies ermöglicht eine steuerbare Einstellung der Spannung in dem Bindemittel, wodurch die Qualität der Umwickelung mit dem Bindemittel und damit die Stabilität des fertigen Ballens verbessert werden kann. Durch die Ausgestaltung der Bremseinheit mit zumindest zwei Bremsleisten wird eine bauraumsparende Bremseinheit bereitgestellt, welche eine Anordnung innerhalb der Ballenpresse ermöglicht, bei der ein Abschnitt des spannungsfreien Bindemittels verkürzt werden kann.

Gemäss der Erfindung sind die Bremseinheit und/oder die Bremsleisten stufenlos und/oder schrittweise aus einer ersten Betriebsposition in mindestens eine zweite Betriebsposition und eine dritte Betriebsposition verlagerbar ausgebildet. In der ersten Betriebsposition kann das Bindemittel in den Führungsspalt der unverlagerten Bremseinheit und/oder Bremsleisten eingelegt werden. Bei einer Verlagerung aus der ersten Betriebsposition in die zweite Betriebsposition kann eine Verlagerung der Bremseinheit und/oder der Bremsleisten derart erfolgen, dass eine, insbesondere voreingestellte, Spannung in dem Bindemittel einstellbar ist. Bei einer Verlagerung in die zweite Betriebsposition kann insbesondere auch eine Trennung des Bindemittels erfolgen. In der dritten Betriebsposition kann das Bindemittel durch eine Verlagerung der Bremseinheit und/oder der Bremsleisten blockiert werden, um beispielsweise bei einer Transportfahrt der Ballenpresse ein Lösen des Bindemittels aus der Bremseinheit zu vermeiden oder um ein Trennen zu ermöglichen. Eine schrittweise Verlagerung der Bremseinheit und/oder der Bremsleisten ermöglicht eine einfache Ansteuerung der unterschiedlichen Betriebspositionen. Eine stufenlose Verlagerung hingegen hat den Vorteil, dass eine stufenlose Regelung der Spannung in der Bindemittel ermöglicht wird, je nach Verlagerung der Bremseinheit und/oder der Bremsleisten.

Vorteilhafterweise ist die Bremseinheit in Schritten von im Wesentlichen 180° rotierbar. Ein Wechsel aus der ersten Betriebsposition in die zweite Betriebsposition kann durch eine einfach Rotation um 180°erfolgen. Durch eine weitere Rotation um 180°kann eine Verlagerung der Bremseinheit aus der zweiten in die dritte Betriebsposition erfolgen. Dies hat den Vorteil, dass mittels einer einfach umzusetzenden und zu erfassenden Bewegung die Betriebspositionen der Bremseinheit einstellbar sind.

Weiterhin Vorzugsweise weisen die Bremsleisten eine Oberflächenprofilierung auf. Hierdurch kann durch eine entsprechende Profilierung zum einen ein Reibkoeffizient der Oberfläche erhöht werden, wodurch eine Bremswirkung der Bremseinheit beispielsweise an ein einzusetzendes Bindemittel anpassbar ist. Zudem können die Bremsleisten eine derart ausgebildete Profilierung, beispielsweise ein Wellenprofil, aufweisen, dass die Profilierungen zweier gegenüberliegender Bremsleisten zusammenwirken, um bei einer, insbesondere translatorischen Verlagerung der Bremsleisten, eine Spann-/Klemmwirkung auf en dazwischen angeordnetes Bindemittel zu bewirken

In vorteilhafter Weiterbildung der Erfindung ist die Trenneinheit, insbesondere unmittelbar, an der Bremseinheit angeordnet, wobei die Trenneinheit in Abhängigkeit einer Verlagerung der Bremseinheit steuerbar ist. Hierbei kann, beispielsweise durch eine mechanische und/oder elektronische Koppelung, eine Verlagerung der Bremseinheit eine Aktivierung der Trenneinheit bewirken, um das Bindemittel zu durchtrennen.

In einer bevorzugten Ausgestaltung der Erfindung sind die Trenneinheit und die Bremseinheit derart ausgebildet, dass die Trenneinheit durch eine Verlagerung der Bremseinheit spannbar ist. Dies hat den Vorteil, dass die Trenneinheit unabhängig von anderen Bauteilen der Ballenpresse wie einer Heckklappe gespannt werden kann, wodurch der konstruktive Aufwand gesenkt werden kann.

Vorteilhafterweise weist die Trenneinheit eine Steuerscheibe auf, in welcher Führungen ausgebildet sind, wobei die Führungen mit einem bremseinheitsseitig angeordneten Steuerelement zusammenwirken. Ein Steuerelement greift dabei in eine Führung ein, so dass die jeweiligen Bewegungen der Bremseinheit und der Trenneinheit auf kostengünstige und störsichere Weise gekoppelt sind. In einer bevorzugten Ausgestaltung der Erfindung ist mindestens ein Aktor zum Verlagern der Bremseinheit und/oder der Bremsleisten vorgesehen. Dies ermöglicht eine Bauraum sparende Konstruktion der Bremseinheit.

In einer bevorzugten Ausgestaltung der Erfindung ist die Bremseinheit benachbart zu dem Zuführspalt angeordnet. Aufgrund der bauraumsparenden Konstruktion der Bremseinheit kann diese besonders dicht, insbesondere unmittelbar, an dem Zuführspalt angeordnet werden. Die Trenneinheit kann dabei spaltseitig an der Bremseinheit angeordnet sein. Dies hat den Vorteil, dass das Bindemittel auch nach einem Trennen bis angrenzend an den Zuführspalt unter Spannung bleibt.

Weitere Merkmale der Erfindung ergeben sich aus der nachfolgenden Beschreibung sowie aus den Zeichnungen, in denen ein Ausführungsbeispiel der Erfindung dargestellt und beschrieben ist.

Es zeigen:
- Fig. 1:: eine schematische Seitenansicht einer Ballenpresse;
- Fig. 2:: eine detaillierte Ansicht einer Bremseinheit der Ballenpresse in Figur 1;
- Fig. 3a,b:: eine schematische Seitenansicht der Bremseinheit in einer ersten Betriebsposition; und
- Fig. 4a,b:: eine schematische Seitenansicht der Bremseinheit in einer zweiten Betriebsposition.

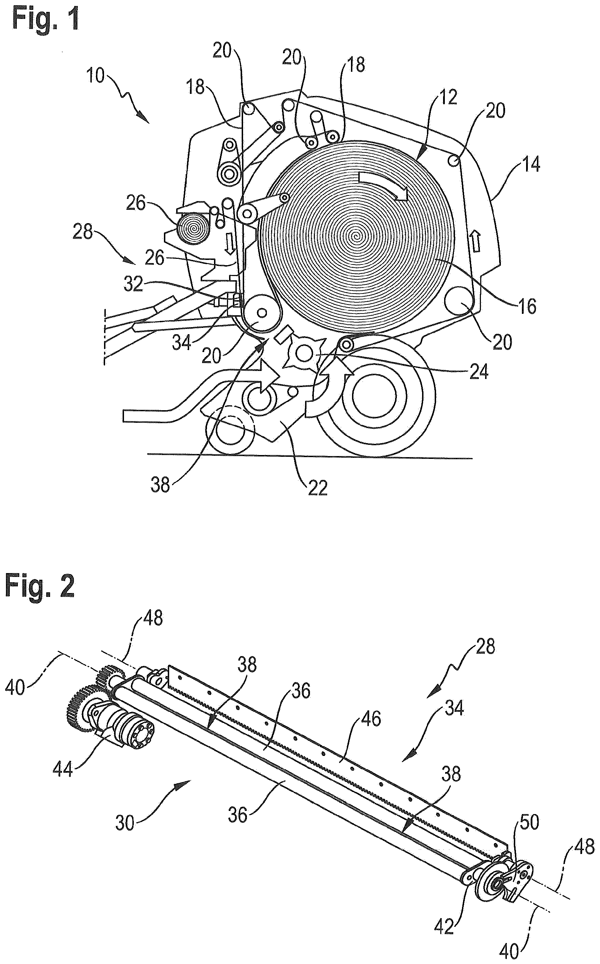

Figur 1 zeigt in einer geschnittenen Seitenansicht eine schematische Darstellung einer Ballenpresse 10 in Form einer Rundballenpresse, welche eine variable Presskammer 12 in einem Gehäuse 14 aufweist. Zum Pressen eines Rundballens 16 weist die Ballenpresse 10 ein endlos umlaufendes Pressmittel 18 auf. Das Pressmittel 18 kann aus einem oder mehreren Pressriemen oder Ketten gebildet werden. Das Pressmittel 18 wird mittels einer Mehrzahl an Rollen 20 geführt, wobei die Rollen 20 ortsfest oder variabel angeordnet sein können. Über eine Aufnahmeeinrichtung 22 wird Erntegut aufgenommen, an einem Drehelement in Form eines Rotors 24 entlang geleitet, wobei das Erntegut zerkleinert werden kann, und in die Presskammer 12 eingeleitet, wo das Erntegut verdichtet und zu einem Rundballen 16 gepresst wird.

Ein fertig gepresster Rundballen 16 wird üblicherweise vor einem Auswerfen aus der Presskammer 12 mit einem Bindemittel 26, beispielsweise einem Garn, einem Netz oder einer Folie, umwickelt, um den Rundballen 16 zu stabilisieren und ein auseinanderfallen zu vermeiden. Hierfür weist die Ballenpresse 10 eine Bindevorrichtung 28 auf, durch welche das Bindemittel 26, welches beispielsweise in Rollenform bevorratet wird, über einen Zuführspalt 32 in die Presskammer 12 zugeführt wird. Das Bindemittel 26 wird dabei mit einer Rolle 20, welche den Zuführspalt 32 an einer Seite begrenzt, in Anlage gebracht und durch die Drehbewegung der Rolle 20 in die Presskammer 12 gefördert, um den Rundballen 16 im Wesentlichen radial außenseitig und/oder randseitig zu umhüllen. Um das Binden zu verbessern, wird das Bindemittel 26 üblicherweise vorgestreckt und vorgespannt um den Rundballen 16 gewickelt. Zum Vorspannen des Bindemittels 26 ist eine Bremseinheit vorgesehen, welche das Bindemittel 26 verzögert, bevor es in die Presskammer 12 eingeführt wird. Nach einer Umhüllung des Rundballens 16 mit einer gewünschten Menge an Bindemittel 26 wird das Bindemittel 26 abgetrennt. Zum Trennen des Bindemittels 26 weist die Bindevorrichtung 28 eine Trenneinheit 34 auf, welcher üblicherweise in Form eines schwenkbar gelagerten Messers ausgebildet ist.

Die Bremseinheit 30 (Fig. 2) weist mindestens zwei parallel zueinander angeordnete Bremsleisten 36 auf, wobei zwischen den Bremsleisten 36 ein Führungsspalt 38 zur Aufnahme und Führung des Bindemittels 26 ausgebildet ist, wobei die Bremseinheit 30 und/oder die Bremsleisten 36 translatorisch und/oder rotatorisch verlagerbar ausgebildet sind. Bei einer translatorischen Verlagerung, beispielsweise der Bremsleisten 36 aufeinander zu oder voneinander weg, ist eine Weite des Führungsspaltes 38 veränderbar und dadurch eine Klemmkraft steuerbar, welche auf das zwischen den Bremsleisten 36 angeordnete Bindemittel 26 wirkt und wodurch eine gewünschte Spannung des Bindemittels 26 einstellbar ist. Bei einer rotatorischen Verlagerung der Bremseinheit 30 und/oder der Bremsleisten 36, kann durch eine Verdrehung beispielsweise der Bremseinheit 30 um eine Drehachse 40 das Bindemittel 26, welches zwischen den Bremsleisten 36 angeordnet ist, mit diesen in Kontakt gebracht werden. Hierdurch ist ein Umschlingungswinkel des Bindemittels 26 an den Bremsleisten 36 einstellbar veränderbar, wodurch eine Verzögerung des Bindemittels 26 steuerbar ist.

Die Bremsleisten 36 der Bremseinheit 30 können für eine rein rotatorische Verlagerung in einem festen Abstand zueinander angeordnet sein, beispielsweise mittels eines oder mehreren Steges 42, welche jeweils endseitig an den Bremsleisten 36 angeordnet sein können. An einem Ende weist die Bremseinheit 30 einen Aktor 44 auf, durch welchen über Zahnräder ein Verschwenken der Bremseinheit 30 um die Drehachse 40 ermöglicht wird. Der Aktor 44 kann in Form eines Elektromotors ausgebildet sein, welcher koaxial zu der Drehachse 40 angeordnet ist. Parallel zu der Bremseinheit 30 ist die Trenneinheit 34 angeordnet. Die Trenneinheit 34 weist einen lösbar befestigten Messerbalken 46 auf, welcher um eine Schwenkachse 48 verschwenkbar gelagert ist, um das Bindemittel 26 zu durchtrennen. Die Trenneinheit 34 ist an einem Ende über eine Steuerscheibe 50 mit der Bremseinheit 30 gekoppelt, so dass eine Bewegung der Trenneinheit 34 in Abhängigkeit einer Bewegung der Bremseinheit 30 erfolgt.

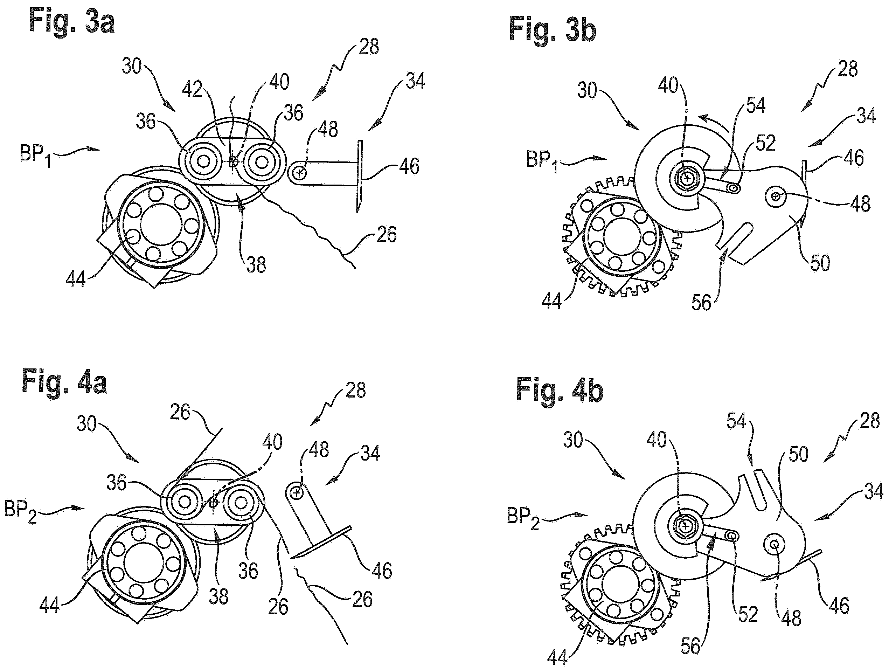

Die Bremseinheit 30 und/oder die Bremsleisten 36 sind erfindungsgemäss schrittweise und/oder stufenlos aus einer ersten Betriebsposition BP₁ (Fig. 3a,b) in eine zweite Betriebsposition BP₂ (Fig. 4a,b) und/oder eine dritte Betriebsposition BP₃ verlagerbar. Hierbei können auch Zwischenpositionen, insbesondere zwischen der ersten und zweiten Betriebsposition BP_{1,2} eingestellt werden, wodurch jeweils die gewünschte Spannung im Bindemittel 26 einstellbar ist. Eine Betriebsposition BP_{1,2,3} oder Zwischenpositionen kann dabei aus jeder anderen Betriebsposition BP_{2,3,1} heraus ansteuerbar sein. Die Bremsleisten 36 sind mittels eines oder mehreren Stegen 42 in einem festen Abstand zueinander angeordnet, wodurch der Führungsspalt 38 zwischen den Bremsleisten 36 ausgebildet wird. In der ersten Betriebsposition BP₁ ist die Bremseinheit 30 im Wesentlichen unverschwenkt und der Führungsspalt 38 weist, bezogen auf eine Förderrichtung des Bindemittels 26, seine größte Weite auf, wodurch das Bindemittel 26 im Wesentlichen ungebremst durch den Führungsspalt 38 bewegbar ist. Dies ermöglicht beispielsweise ein Einführen des Bindemittels 26 durch die Bremseinheit 30.

Die Trenneinheit 34 (Fig. 3b) ist über die Steuerscheibe 50 mit der Bremseinheit 30 gekoppelt, um die Verlagerung der Trenneinheit 34 mit der, der Bremseinheit 30 abzustimmen. In der ersten Betriebsposition BP₁ ist die Trenneinheit 34 unverschwenkt dargestellt. Dabei greift ein Steuerelement 52 in einen ersten Führungsschlitz 54 der Steuerscheibe 50 ein. Bei einem Verschwenken, insbesondere Rotieren, der Bremseinheit 30 im Gegenuhrzeigersinn (Fig. 4a,b) wird das Steuerelement 52 unter Drehung der Trenneinheit 34 um die Schwenkachse 48 aus dem ersten Führungsschlitz 54 herausbewegt. Hierdurch wird die, beispielsweise federgespannte und/oder arretierte, Trenneinheit 34 freigegeben, um deren Verschwenken zum Trennen des Bindemittels 26 ermöglichen, und/oder aktiviert, um das Bindemittel 26 zu trennen. Gleichzeitig kommt es durch das Rotieren, bzw. Verlagern, der Bremseinheit 30 zu einer Erhöhung der Spannung in dem Bindemittel 26. Die Spannung in dem Bindemittel 26, also die Bremswirkung der Bremseinheit 30, wird dabei in Abhängigkeit der Verlagerung der Bremseinheit 30 eingestellt.

In der in Figur 4a dargestellten zweiten Betriebsposition BP₂ ist die Bremseinheit 30 im Vergleich zu Figur 3a um 180°entgegen des Uhrzeige rsinnes verlagert bzw. rotiert. Hierdurch ist eine Umschlingung des Bindemittels 26 an den Bremsleisten 36 erhöht worden, wodurch die Spannung in dem Bindemittel 26 ebenfalls erhöht wird. Durch die Rotation der Bremseinheit 30 ist die Trenneinheit 34 freigegeben und, wie dargestellt, aktiviert worden, um das Bindemittel 26 zu trennen. In dieser zweiten Betriebsposition BP₂ wird dabei (Fig. 4b) das Steuerelement 52 mit einem zweiten Führungsschlitz 56 in Anlage gebracht. Durch eine Rückstellung der Bremseinheit 30 in die erste Betriebsposition BP₁ ist hierdurch eine Rückstellung der Trenneinheit 34 möglich. Durch eine Rotation der Bremseinheit 30 aus der zweiten Betriebsposition BP₂ um im Wesentlichen weitere 180°entgegen des Uhrzeigersin nes kann eine dritte Betriebsposition BP3 der Bremseinheit 30 eingestellt werden, in der das Bindemittel 26 durch die Bremsleisten 36 geklemmt wird. Dies hat den Vorteil, dass beispielsweise bei einer Transportfahr eine zuverlässige Sicherung des Bindemittels 26 gegen ein Lösen ermöglicht werden kann. Eine Steuerung der Bindevorrichtung 28 kann dabei über eine zugfahrzeugseitige und/oder ballenpressenseitige Steuerungseinheit (nicht dargestellt) erfolgen.

### Bezugszeichenliste

- 10: Ballenpresse
- 12: Presskammer
- 14: Gehäuse
- 16: Rundballen
- 18: Pressmittel
- 20: Rollen
- 22: Aufnahmevorrichtung
- 24: Rotor
- 26: Bindemittel
- 28: Bindevorrichtung
- 30: Bremseinheit
- 32: Zuführspalt
- 34: Trenneinheit
- 36: Bremsleiste
- 38: Führungsspalt
- 40: Drehachse
- 42: Steg
- 44: Aktor
- 46: Messerbalken
- 48: Schwenkachse
- 50: Steuerscheibe
- 52: Steuerelement
- 54: erster Führungsschlitz
- 56: zweite Führungsschlitz

## Patentansprüche

1. Ballenpresse mit einer im einem Gehäuse (14) angeordneten Presskammer (12), zum Pressen von Rundballen (16) aus einem Erntegut, einer Bindevorrichtung (28) zum Bereitstellen eines Bindemittels (26) zum Umwickeln eines Rundballens (16) in der Presskammer (12), wobei umfangsseitig der Presskammer (12) mindestens ein Zuführspalt (32) ausgebildet ist, durch welchen das Bindemittel (26) in die Presskammer (16) zuführbar ist, wobei die Bindevorrichtung (28) eine Bremseinheit (30) zum Spannen und/oder Klemmen des Bindemittels (26) und eine Trenneinheit (34) zum Trennen des Bindemittels (26) umfasst, wobei die Bremseinheit (30) mindestens zwei parallel zueinander angeordnete Bremsleisten (36) aufweist, wobei zwischen den Bremsleisten (36) ein Führungsspalt (38) zur Aufnahme des Bindemittels (26) ausgebildet ist, wobei die Bremseinheit (30) und/oder die Bremsleisten (36) translatorisch und/oder rotatorisch verlagerbar ausgebildet sind, wobei die Bremseinheit (30) und/oder die Bremsleisten (36) stufenlos oder schrittweise aus einer ersten Betriebsposition (BP₁) in mindestens eine zweite Betriebsposition (BP₂) und eine dritte Betriebsposition (BP₃) verlagerbar ausgebildet sind.

2. Ballenpresse nach Anspruch 1, **dadurch gekennzeichnet, dass** die Bremseinheit (30) in Schritten von im Wesentlichen 180° rotierbar ist.

3. Ballenpresse nach einem der Ansprüche 1 oder 2, **dadurch gekennzeichnet, dass** die Bremsleisten (36) eine Oberflächenprofilierung aufweisen.

4. Ballenpresse nach einem der vorherigen Ansprüche, **dadurch gekennzeichnet, dass** die Trenneinheit (34) an der Bremseinheit (30) angeordnet ist, wobei die Trenneinheit (34) in Abhängigkeit einer Verlagerung der Bremseinheit (30) steuerbar ist.

5. Ballenpresse nach einem der vorherigen Ansprüche, **dadurch gekennzeichnet, dass** die Trenneinheit (34) und die Bremseinheit (30) derart ausgebildet sind, dass die Trenneinheit (34) durch eine Verlagerung der Bremseinheit (30) spannbar ist.

6. Ballenpresse nach einem der vorherigen Ansprüche, **dadurch gekennzeichnet, dass** die Trenneinheit (34) eine Steuerscheibe (50) aufweist, in welcher Führungen (52, 54) ausgebildet sind, wobei die Führungen (52, 54) mit einem bremseinheitsseitig angeordneten Steuerelement (52) zusammenwirken.

7. Ballenpresse nach einem der vorherigen Ansprüche, **dadurch gekennzeichnet, dass** mindestens ein Aktor (44) zum Verlagern der Bremseinheit (30) und/oder der Bremsleisten (36) vorgesehen ist.

8. Ballenpresse nach einem der vorherigen Ansprüche, **dadurch gekennzeichnet, dass** die Bremseinheit (30) benachbart zu dem Zuführspalt (32) angeordnet ist.

## Claims

1. A bale press comprising a press chamber (12) arranged in a housing (14) for pressing round bales (16) from a crop material, a binding device (28) for providing a binding means (26) for wrapping a round bale (16) in the press chamber (12), wherein provided peripherally of the press chamber (12) is at least one feed gap (32) through which the binding means (26) can be fed into the press chamber (16), wherein the binding device (28) has a braking unit (30) for tightening and/or clamping the binding means (26) and a severing unit (34) for severing the binding agent (26), wherein the brake unit (30) has at least two brake bars (36) arranged in mutually parallel relationship, wherein provided between the brake bars (36) is a guide gap (38) for receiving the binding means (26), wherein the brake unit (30) and/or the brake bars (36) are adapted to be displaceable with a translatory and/or rotary movement, wherein the brake unit (30) and/or the brake bars (36) are adapted to be displaceable steplessly or step-wise from a first operating position (BP₁) into at least a second operating position (BP₂) and a third operating position (BP₃).

2. A bale press according to claim 1 **characterised in that** the brake unit (30) is rotatable in steps of substantially 180°.

3. A bale press according to one of claims 1 and 2 **characterised in that** the brake bars (36) have a surface profiling.

4. A bale press according to one of the preceding claims **characterised in that** the severing unit (34) is arranged at the brake unit (30), wherein the separating unit (34) is controllable in dependence on a displacement of the brake unit (30).

5. A bale press according to one of the preceding claims **characterised in that** the severing unit (34) and the brake unit (30) are so designed that the severing unit (34) can be tightened by a displacement of the brake unit (30).

6. A bale press according to one of the preceding claims **characterised in that** the severing unit (34) has a control disc (50) in which there are guides (52, 54), the guides (52, 54) cooperating with a control element (52) arranged at the brake unit side.

7. A bale press according to one of the preceding claims **characterised in that** there is provided at least one actuator (44) for displacement of the brake unit (30) and/or the brake bars (36).

8. A bale press according to one of the preceding claims **characterised in that** the brake unit (30) is arranged adjacent to the feed gap (32).

## Revendications

1. Presse à balles comprenant une chambre de pressage (12) disposée dans un carter (14) pour presser des balles rondes (16) à partir de produit récolté, un dispositif de liage (28) pour fournir un moyen de liage (26) pour enrubanner une balle ronde (16) dans la chambre de pressage (12), circonférentiellement à la chambre de pressage (12) étant ménagé au moins un interstice d'amenée (32) à travers lequel le moyen de liage (26) peut être amené dans la chambre de pressage (16), le dispositif de liage (28) incluant une unité de freinage (30) pour tendre et/ou pincer le moyen de liage (26) et une unité de sectionnement (34) pour sectionner le moyen de liage (26), l'unité de freinage (30) comprenant au moins deux barrettes de freinage (36) disposées parallèlement l'une à l'autre, entre les barrettes de freinage (36) étant ménagé un interstice de guidage (38) pour recevoir le moyen de liage (26), l'unité de freinage (30) et/ou les barrettes de freinage (36) étant conçues pour être déplaçables en translation et/ou en rotation, l'unité de freinage (30) et les barrettes de freinage (36) étant conçues pour être déplaçables en continu ou pas à pas d'une première position de fonctionnement (BP₁) vers au moins une deuxième position de fonctionnement (BP₂) et une troisième position de fonctionnement (BP₃).

2. Presse à balles selon la revendication 1, **caractérisée en ce que** l'unité de freinage (30) peut tourner par pas d'environ 180°.

3. Presse à balles selon une des revendications 1 ou 2, **caractérisée en ce que** les barrettes de freinage (36) présentent un profilage superficiel.

4. Presse à balles selon une des revendications précédentes, **caractérisée en ce que** l'unité de sectionnement (34) est disposée sur l'unité de freinage (30), l'unité de sectionnement (34) étant commandable en fonction d'un déplacement de l'unité de freinage (30).

5. Presse à balles selon une des revendications précédentes, **caractérisée en ce que** l'unité de sectionnement (34) et l'unité de freinage (30) sont conçues de façon que l'unité de sectionnement (34) soit mise en tension par un déplacement de l'unité de freinage (30).

6. Presse à balles selon une des revendications précédentes, **caractérisée en ce que** l'unité de sectionnement (34) comporte une came (50) dans laquelle sont ménagées des moyens de guidage (52, 54), les moyens de guidage (52, 54) coopérant avec un élément de commande (52) disposé côté unité de freinage.

7. Presse à balles selon une des revendications précédentes, **caractérisée en ce qu'**au moins un actionneur (44) est prévu pour déplacer l'unité de freinage (30) et/ou les barrettes de freinage (36) .

8. Presse à balles selon une des revendications précédentes, **caractérisée en ce que** l'unité de freinage (30) est disposée au voisinage de l'interstice d'amenée (32).
